# FASCICULE DE BREVET EUROPEEN

(11) **EP 0 746 084 B1**
(45) Date de publication et mention de la délivrance du brevet: **03.02.1999**
(21) Numéro de dépôt: 96107856.5
(22) Date de dépôt: 17.05.1996
(51) Int. Cl.: H02K 16/00, H02K 16/02, H02K 37/12, G04C 3/14

(54) **Moteur birotor multipolaire**
Mehrpoliger Zweiläufermotor
Multipolar two-rotor motor

(30) Priorité: 29.05.1995 FR 9506309
(43) Date de publication de la demande: 04.12.1996
(73) Titulaire: Eta SA Fabriques d'Ebauches, 2540 Grenchen (CH)
(72) Inventeur: Daho, Taghezout, 1110 Morges (CH)
(74) Mandataire: Patry, Didier Marcel Pierre

(56) Documents cités:
- EP-A- 0 547 534
- WO-A-86/00765
- CH-A- 683 810
- FR-A- 2 475 247

## Description

La présente invention concerne un moteur birotor multipolaire, notamment pour l'entraînement direct de deux aiguilles d'une pièce d'horlogerie. Un tel moteur peut également être utilisé pour divers entraînements d'aiguilles de compteurs ou d'organes mobiles.

A l'heure actuelle, on voit apparaître un nombre de plus en plus élevé de pièces d'horlogerie qui comportent au moins une paire d'aiguilles coaxiales prévues pour se déplacer indépendamment l'une de l'autre. Ces pièces d'horlogerie sont, par exemple, des montres-chronographes dans lesquelles l'aiguille de chronographe est montée au centre avec l'aiguille des heures et l'aiguille des minutes. On connaît encore, par exemple, des pièces d'horlogerie qui ne comportent que deux aiguilles indiquant les heures et les minutes, mais dans lesquelles ces deux aiguilles peuvent également se déplacer indépendamment l'une de l'autre afin de fournir une deuxième information différente de l'heure courante.

Généralement, dans les pièces d'horlogerie de ce type, l'actionnement des deux aiguilles, indépendamment l'une de l'autre, est rendu possible par l'utilisation de deux moteurs. Le plus souvent, chacun des moteurs est associé à une des aiguilles.

On sait par ailleurs, afin de simplifier la construction et de réduire le prix de revient des pièces d'horlogerie électromécaniques en général, qu'il peut être avantageux d'utiliser des moteurs multipolaires. L'avantage d'un moteur multipolaire, par rapport à un moteur bipolaire, est qu'il permet l'entraînement direct d'une aiguille sans démultiplication du mouvement. Dans ces conditions, il est possible de monter l'aiguille directement sur l'axe du rotor du moteur, ce qui supprime la nécessité d'utiliser des engrenages.

Il est connu, notamment par le document EP 0 312 946 B1 , d'entraîner directement deux aiguilles coaxiales à l'aide de deux moteurs multipolaires. Selon ce document, l'axe du rotor d'un premier moteur a la forme d'un cylindre creux qui forme le canon d'une première aiguille et l'axe du rotor du deuxième moteur se prolonge par un arbre qui passe à l'intérieur de l'axe creux du premier rotor. Ainsi l'axe du rotor du deuxième moteur forme une chaussée prévue pour recevoir la deuxième aiguille. Les deux moteurs sont disposés l'un au dessus de l'autre.

Une telle construction présente des défauts. En effet, l'assemblage de deux moteurs disposés l'un au dessus de l'autre présente une hauteur pouvant être trop importante pour certaines applications comme, par exemple, les montres extra-plates. De plus, afin de réduire au minimum les influences magnétiques d'un moteur sur l'autre, il est nécessaire de prévoir un espacement entre ces deux moteurs, ce qui augmente encore la hauteur de cet assemblage de l'art antérieur.

Un but de la présente invention est donc de réduire l'encombrement des assemblages moteurs prévus pour actionner indépendamment deux aiguilles coaxiales en fournissant un moteur comportant deux rotors pour entraîner deux aiguilles indépendamment l'une de l'autre.

Le document japonais JP 50-77811 décrit déjà un moteur pour pièce d'horlogerie qui comporte une pluralité de rotors pouvant être actionnés indépendamment les uns des autres. Toutefois, selon ce document, la pièce d'horlogerie comporte des moyens électroniques capables d'engendrer plusieurs signaux de commande ayant des formes différentes et qui sont prévus chacun pour commander un des rotors du moteur.

Un tel dispositif présente des défauts. En effet, le fait d'avoir recours à des moyens électroniques pour engendrer les différents signaux de commande complique la réalisation de la partie électronique du dispositif et rend le fonctionnement du moteur moins fiable avec un rendement énergétique peu favorable.

Un autre but de la présente invention est donc de fournir un moteur, comportant deux rotors pour entraîner deux aiguilles indépendamment l'une de l'autre, dans lequel il n'est pas nécessaire d'avoir recours à des signaux de commande complexes pour actionner les deux rotors indépendamment l'un de l'autre, tout en assurant une grande fiabilité de fonctionnement.

A cet effet, la présente invention a pour objet un moteur birotor multipolaire caractérisé en ce qu'il comprend:
- des premier et deuxième rotors multipolaires coaxiaux comportant chacun une pluralité de dipôles magnétiques orientés sensiblement parallèlement à l'axe de rotation des deux rotors et disposés selon un arrangement symétrique annulaire autour dudit axe, lesdits dipôles étant en outre orientés alternativement dans un premier sens et dans le sens opposé;
- des première et deuxième parties statoriques;
- une partie statorique intermédiaire disposée entre lesdites première et deuxième parties statoriques; chacune desdites parties statoriques comprenant une ouverture statorique, lesdites ouvertures statoriques étant alignées selon un axe confondu avec ledit axe de rotation desdits rotors, lesdites première et deuxième parties statoriques comprenant en outre chacune des premier et deuxième épanouissements polaires situés de part et d'autre de ladite ouverture statorique respective, lesdits premiers et deuxièmes épanouissements polaires définissant respectivement des premières et deuxièmes crénelures formées d'une succession régulière de dents et d'embrasures sur les bords desdites ouvertures statoriques.

Ledit moteur birotor est encore caractérisé en ce que chacun desdits épanouissements polaires est relié audit stator intermédiaire par une branche de guidage du flux magnétique sur laquelle est montée une bobine, lesdites bobines étant en outre reliées électriquement à des moyens prévus pour commander et alimenter ledit moteur birotor,

Ledit moteur birotor est encore caractérisé en ce que ledit premier rotor est monté rotatif entre ladite première partie statorique et ladite partie statorique intermédiaire, lesdits dipôles du premier rotor se trouvant d'une part en regard desdites première et deuxième crénelures de ladite première partie statorique et d'autre part en regard d'un épanouissement de la partie statorique intermédiaire, et en ce que ledit deuxième rotor est monté rotatif entre ladite deuxième partie statorique et ladite partie statorique intermédiaire, lesdits dipôles du deuxième rotor se trouvant d'une part en regard desdites première et deuxième crénelures de ladite deuxième partie statorique et d'autre part en regard dudit épanouissement de la partie statorique intermédiaire.

Grâce à ces caractéristiques, on a fourni un moteur birotor présentant un encombrement réduit. De plus, la présence de la partie statorique intermédiaire, qui est disposée entre le premier et le deuxième rotor et qui est reliée aux quatre épanouissements statoriques par quatre branches de guidage du flux magnétique, assure le découplage magnétique entre la première et la deuxième partie statorique.

Un autre avantage de la présente invention est que la partie statorique intermédiaire assure une fonction de blindage du moteur contre les champs magnétiques extérieurs, ce qui augmente la fiabilité de marche du moteur.

D'autres avantages de la présente invention apparaîtront au cours de la description qui va suivre, donnée uniquement à titre d'exemple et faite en se référant aux dessins annexés dans lesquels:
- la figure 1 est une vue de dessus d'un mode de réalisation du moteur selon la présente invention (les rotors ayant été omis pour alléger la figure);
- la figure 2 est une vue en coupe selon la ligne II-II de la figure 1 (les rotors étant représentés);
- la figure 3 est une vue de dessus de l'assemblage, formé par le stator intermédiaire, les branches de guidage supérieures du flux magnétique et les bobines qui leurs sont associées, appartenant au moteur de la figure 1;
- la figure 4 est une vue de dessus d'une variante de réalisation de la présente invention.

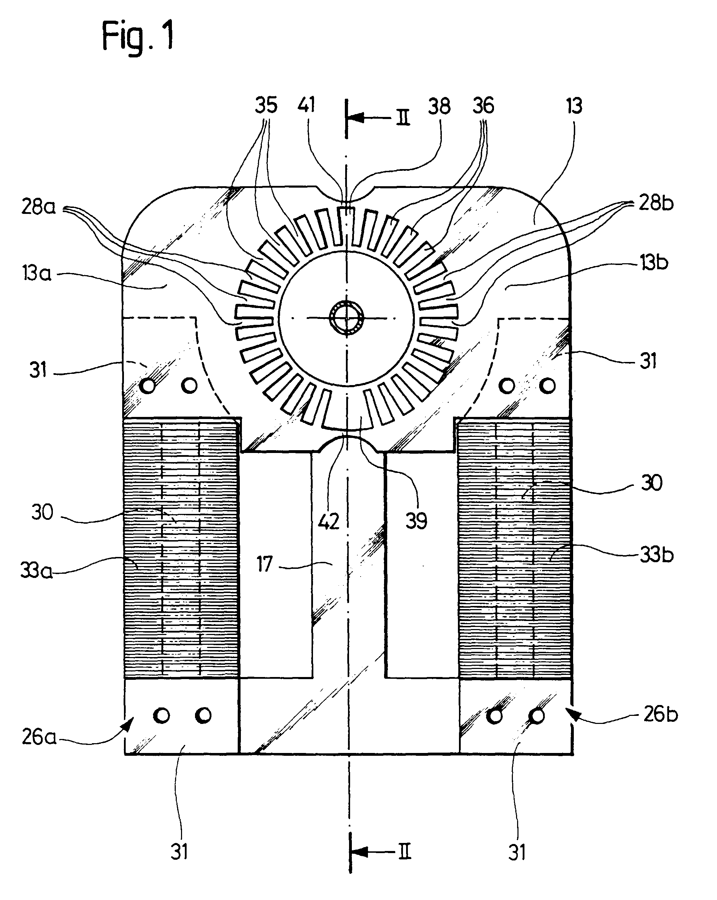

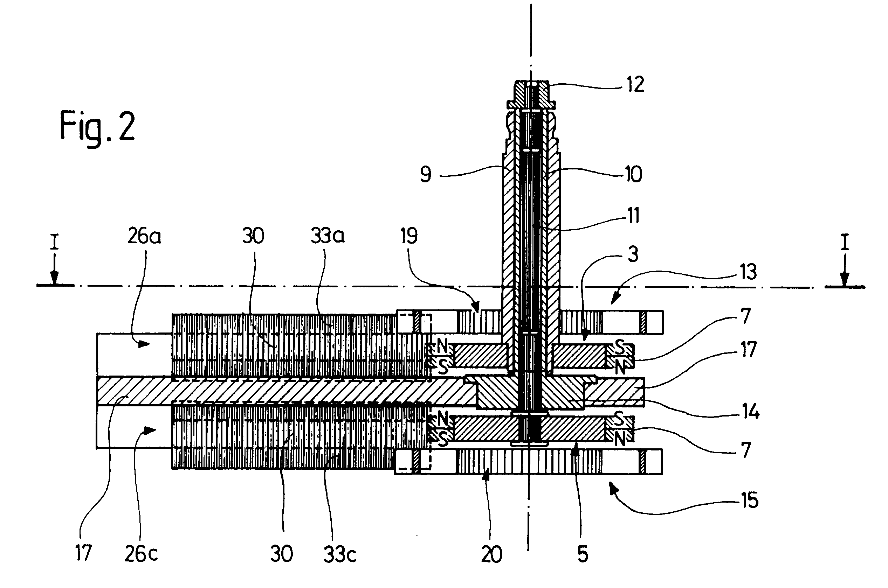

En se référant aux figures 1 à 3, nous allons décrire un mode de réalisation d'un moteur selon la présente invention. Ce moteur peut être utilisé notamment pour entraîner dans les deux sens et de manière indépendante l'aiguille des heures et l'aiguille des minutes d'une horloge. On voit sur la figure 2 que le moteur comporte deux rotors coaxiaux qui sont respectivement référencés 3 et 5. Ces deux rotors ainsi que les axes sur lesquels ils sont montés ont été omis sur la figure 1 pour alléger le dessin.

Les rotors 3 et 5 sont des rotors multipolaires à aimantation axiale. Il sont, dans le présent exemple, identiques. Ils ont chacun la forme générale d'un disque circulaire et comportent, une partie centrale réalisée en un matériau magnétique entourée d'un anneau périphérique formé d'un ensemble de dipôles magnétiques constitués par des aimants permanents référencés 7. Dans cet exemple, les dipôles magnétiques sont au nombre de 30 pour chacun des rotors. Ils sont, de plus, tous orientés axialement, c'est-à-dire parallèlement à l'axe de rotation du rotor.

Les aimants permanents 7 sont arrangés de façon régulière sur la périphérie de chaque rotor et divisent le rotor en 30 secteurs de 12 degrés chacun. De plus, les aimants 7, ou dipôles magnétiques, sont orientés alternativement dans un premier sens et dans le sens opposé. En conséquence, si on se place dans le plan de rotation du rotor, la distance angulaire séparant un dipôle magnétique du prochain dipôle orienté dans le même sens est donc de deux fois 12 degrés, c'est-à-dire 24 degrés.

En se référant à la figure 2, on voit que les rotors multipolaires 3 et 5 sont respectivement montés sur des axes 9 et 11. L'axe 9 qui porte le rotor 3 est un axe creux à l'intérieur duquel passe un tube de centrage 10 réalisé en un matériau magnétique comme le laiton par exemple. L'axe 9 est monté rotatif autour du tube de centrage 10 qui est fixe. Le tube de centrage 10 est creux également, et on voit que l'axe 11 qui porte le rotor 5 passe à l'intérieur du tube 10. Dans le cas où le moteur birotor du présent exemple est utilisé pour entraîner directement une aiguille des heures et une aiguille des minutes, l'une des aiguilles pourra être montée directement sur l'axe ou canon 9, alors que l'autre aiguille sera de préférence montée sur un canon 12 dans lequel est enchâssée l'extrémité de l'axe 11.

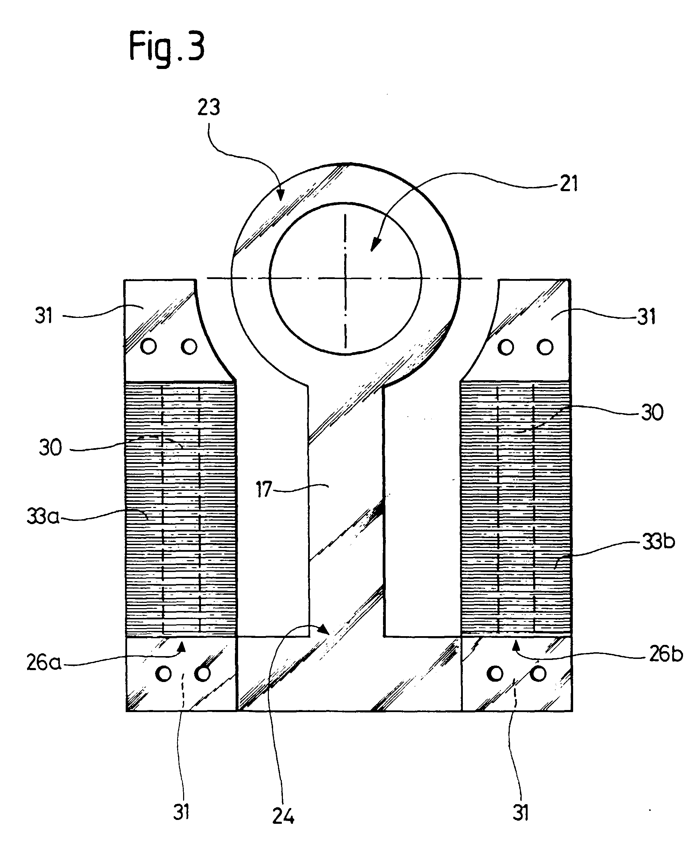

Le moteur comprend en outre une première et une deuxième partie statorique 13 et 15. Ces deux parties statoriques comportent chacune une ouverture statorique 19 et 20 de forme généralement circulaire. Le moteur comprend encore une partie statorique intermédiaire 17 qui comporte une ouverture statorique 21 (figure 3) dans laquelle est agencé un flasque 14. Les trois parties statoriques 13, 15 et 17 sont disposées parallèlement les unes aux autres et leurs ouvertures statoriques sont alignées selon un axe confondu avec l'axe des rotors 3 et 5. L'ouverture statorique 21 de la partie statorique intermédiaire 17 reçoit une extrémité du tube de centrage 10 qui s'élargit en forme de flasque 14.

Grâce à la construction qui vient d'être décrite, le tube de centrage 10 est fixé à la partie statorique intermédiaire 17, et les axes 9 et 11 portant les rotors 3 et 5 sont positionnés longitudinalement par rapport à ce tube 10 tout en étant libre de pivoter. On remarquera encore sur la figure 2 que le premier rotor 3 est disposé dans un espace entre la première partie statorique 13 et la partie statorique intermédiaire 17 et que, de façon symétrique, le deuxième rotor 5 est disposé dans un espace entre la deuxième partie statorique 15 et la partie statorique intermédiaire 17.

La première et la deuxième partie statorique 13 et 15 comprennent chacune deux épanouissements polaires situés de part et d'autre de l'ouverture statorique (seuls les épanouissements polaires 13a et 13b de la première partie statorique 13 sont visibles sur la figure 1). Chacun de ces épanouissements polaires se termine par une crénelure 28a, 28b sur le bord de l'ouverture statorique. Précisons que, dans le présent exemple, la première et la deuxième partie statorique 13 et 15 sont identiques.

Comme on peut le voir sur la figure 3, la partie statorique intermédiaire 17 est formée, d'une part, d'une partie annulaire 23 qui entoure l'ouverture statorique 21 et, d'autre part, d'une partie de liaison 24 en forme de T. La partie annulaire 23 est disposée entre la première et de la deuxième partie statorique, vis-à-vis à la fois des deux crénelures 28a et 28b de la première partie statorique 13 et des crénelures (non-visibles sur la figure 1) de la deuxième partie statorique 15. La partie de liaison 24 comporte deux oreilles de fixation 31 qui forment respectivement l'extrémité de gauche et l'extrémité de droite de la barre d'un T. L'oreille de gauche est reliée magnétiquement par une branche de guidage du flux magnétique 26a à l'épanouissement polaire 13a de la partie statorique 13, et par une branche de guidage du flux magnétique 26c à l'épanouissement correspondant de la partie statorique 15. De façon semblable, l'oreille de droite est reliée magnétiquement par des branches de guidage 26b et 26d à l'épanouissement polaire 13b du premier stator et à l'épanouissement correspondant du deuxième stator.

Chacune des branches de guidage du flux magnétique 26a, 26b, 26c et 26d est formée d'un noyau rectiligne 30 terminé à ses deux extrémités par des oreilles de fixation. La liaison entre les branches et les parties statoriques peut être assurée par des vis (non représentées). Toutefois, tout autre moyen de fixation connu de l'homme du métier est envisageable. Quatre enroulements ou bobines 33a, 33b, 33c et 33d sont montés autour des noyaux 30 des branches 26a, 26b, 26c et 26d. Ces quatre bobines sont également reliées électriquement à des moyens de commande et d'alimentation (non représentés).

Comme nous l'avons déjà dit, chacun des épanouissements polaires 13a, 13b et 15a, 15b de la première et de la deuxième partie statorique se termine par une crénelure agencée sur le bord du trou statorique. Comme on peut le voir sur la figure 1, ces crénelures ou dentelures sont formées chacune d'une alternance de dents 35 et d'embrasures 36 qui, dans cet exemple, ont toutes la même largeur. Les deux crénelures 28a et 28b formées sur le bord de l'ouverture statorique 19 sont séparées l'une de l'autre par deux embrasures de liaison référencées 38 et 39 sur la figure 1. Ces deux embrasures de liaison sont disposées en regard de deux isthmes 41 et 42 qui forment des zones à haute réluctance servant à isoler magnétiquement les deux épanouissements polaires statoriques 13a et 13b.

En se référant à nouveau à la figure 2, on peut voir que selon la construction décrite jusqu'ici, les noyaux 30 des différentes bobines 33a, 33b, 33c et 33d sont chacun reliés magnétiquement par leur première extrémité à l'un des épanouissements statoriques respectifs et par leur deuxième extrémité à la partie statorique intermédiaire 17. Ainsi, un courant circulant dans une des bobines 33a, 33b, 33c ou 33d produit un champ magnétique qui est conduit, d'une part, jusqu'à un des épanouissements statoriques respectifs et, d'autre part, jusqu'à la partie statorique intermédiaire 17. Les lignes de champ magnétique ainsi guidées se referment à travers un entrefer et définissent un circuit magnétique principal par bobine 33a, 33b, 33c et 33d. Afin de concentrer sur les aimants permanents des deux rotors 3 et 5 le champ magnétique produit dans l'entrefer par chacune des bobines, il est avantageux que la partie de forme généralement annulaire 23 du stator intermédiaire s'étende le moins possible à l'extérieur de la région située strictement vis-à-vis des crénelures du premier et du deuxième stator 13 et 15.

Conformément à ce qui vient d'être décrit, le moteur birotor du présent exemple comporte quatre circuits magnétiques principaux. Chacun de ces circuits magnétiques est formé par des parties ferromagnétiques qui canalisent le champ d'induction produit par une des bobines vers un entrefer entre les bords duquel tournent les aimants d'un des rotors. Il est à noter de plus que l'expérience montre que le couplage entre les différents circuits magnétiques principaux est remarquablement faible, à tel point qu'on peut le négliger tout à fait.

En se référant à nouveau à la figure 1, nous allons maintenant décrire de façon plus détaillée les crénelures qui terminent chacun des épanouissements polaires de la première et de la deuxième partie statorique 13 et 15. Comme nous l'avons déjà dit, dans cet exemple, chacune des crénelures est régulière. De plus, chaque crénelure est prévue pour que l'écartement entre le centre d'une dent et le centre de la dent suivante soit égal à l'écartement séparant, sur le rotor, un dipôle magnétique du prochain dipôle orienté dans le même sens. Dans ces conditions, on comprendra que si le pôle nord d'un dipôle du rotor se trouve exactement en face d'une dent, les autres dents de la même crénelure se trouveront également exactement en face d'un pôle nord du rotor.

Un examen attentif de la figure 1 révèle que les deux crénelures de la même partie statorique (les crénelures 28a et 28b pour la partie statorique 13) sont décalées angulairement. Plus précisément, si la distance angulaire séparant deux dents d'une même crénelure est toujours un multiple de 24 degrés dans le présent mode décrit, la distance angulaire séparant une dent d'une crénelure d'une dent de l'autre crénelure est égale à un multiple de 24 degrés augmenté ou diminué de 6 degrés. Dans ces conditions, on comprendra que si les dents d'une crénelure se trouvent exactement en face de pôles nord d'un rotor, les dents de l'autre crénelure se trouvent chacune exactement à mi-chemin entre un pôle nord et un pôle sud de ce rotor.

A titre d'exemple, on va maintenant décrire un mode de fonctionnement du moteur birotor selon le premier mode de réalisation de la présente invention. Selon ce mode de fonctionnement, le déplacement pas à pas de chacun des rotors dans un sens donné est commandé indépendamment en alimentant en alternance les deux bobines qui sont associées à ce rotor. Lorsque la bobine 33a est alimentée par un courant circulant dans un sens donné, le champ magnétique ainsi produit amène la moitié des dipôles du rotor 3 qui sont orientés dans un sens donné à s'aligner en regard des dents de la crénelure 28a. Si, à l'instant suivant, c'est la bobine 33b qui est alimentée, la moitié des dipôles du rotor 3 qui sont orientés dans un sens donné vont s'aligner sur les dents de la crénelure 28b. On comprendra donc, qu'en alimentant alternativement les bobines 33a et 33b et en choisissant correctement le sens de circulation du courant dans celles-ci, il est possible de commander un déplacement pas à pas du rotor dans l'un ou dans l'autre sens de rotation. En raison du décalage de 6 degrés entre les deux crénelures, chaque pas du rotor correspond à 6 degrés et le tour complet correspond à 60 pas, ce qui est avantageux pour l'entraînement direct d'une aiguille de montre.

Un avantage du mode de réalisation qui vient d'être décrit, est que le moteur peut fonctionner dans les deux sens sans nécessiter des moyens supplémentaires pour fournir un couple de positionnement pour les rotors 3 et 5. En effet, en maintenant l'alimentation de la bobine qui vient de faire effectuer un pas au rotor durant le temps d'arrêt qui suit ce pas, on produit le couple de positionnement désiré. Un tel arrangement ne convient toutefois pas dans les situations où l'on désire limiter la consommation d'électricité du moteur.

Nous allons maintenant décrire brièvement un deuxième mode de réalisation de la présente invention particulièrement adapté aux applications basse consommation comme les montres bracelets par exemple. Dans cette variante de l'invention, la structure du moteur peut être pratiquement identique à la structure du moteur décrit plus haut. Toutefois, au lieu de compter 30 dipôles comme dans l'exemple précédant, les rotors multipolaires à aimantation axiale de cet exemple en comportent 60.

La deuxième différence essentielle entre le présent mode de réalisation et le précédent est qu'outre sa fonction de canalisation des champs magnétiques produits par les différentes bobines, la partie statorique intermédiaire 17 fournit également un couple de positionnement pour chacun des rotors. A cet effet, des encoches (non représentées sur les figures) sont pratiquées dans la partie annulaire 23 de la partie statorique intermédiaire.

L'homme du métier sait bien comment, dans le cas d'un moteur multipolaire à un seul rotor, disposer des encoches sur le stator pour déterminer la position de repos du rotor et donc son couple de positionnement. Dans le cas du moteur birotor de la présente invention, il suffit de disposer sur la partie annulaire 23 de la partie statorique intermédiaire 17 les encoches nécessaires pour déterminer le couple de positionnement d'un seul des rotors. Naturellement, par symétrie, ces encoches détermineront également le couple de positionnement du deuxième rotor. Toutefois, ce qui est déterminant dans le couple de positionnement d'un rotor, c'est sa valeur mesurée relativement aux crénelures du stator. Dans ces conditions, en décalant angulairement d'un angle adéquat les crénelures sur la deuxième partie statorique 15 par rapport à celles sur la première partie statorique 13, on peut obtenir deux couples de positionnement quelconques pour les deux rotors 3, 5.

Grâce à ces modifications, le moteur de la présente invention peut fonctionner sans consommer d'électricité pour fournir un couple de positionnement aux rotors. De plus, la commande du moteur est simplifiée puisqu'une seule bobine est nécessaire pour faire avancer un rotor dans un sens et que l'autre bobine est utilisée pour l'autre sens.

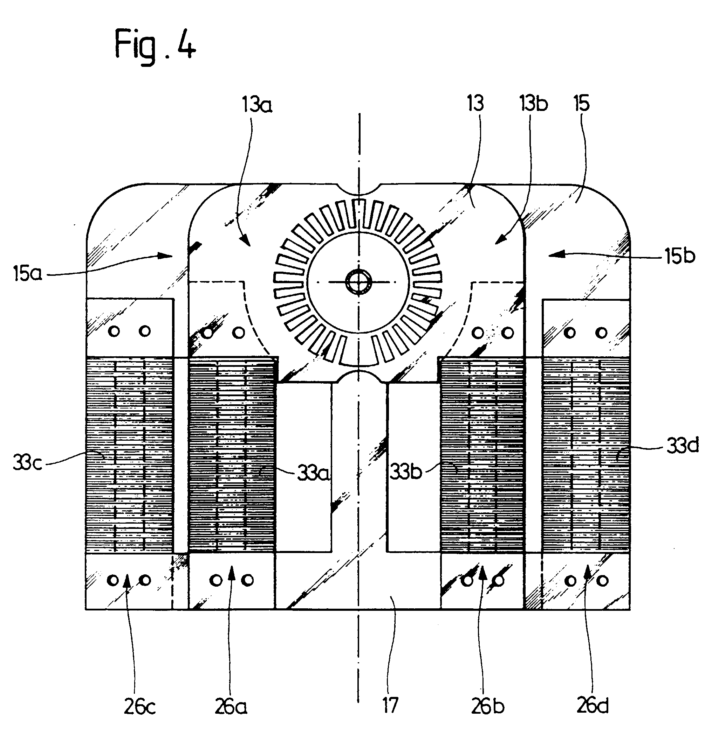

On voit finalement sur la figure 4 une vue en coupe schématique d'une variante du premier mode de réalisation de la présente invention. Le principe de fonctionnement de ce moteur est identique à l'un de ceux qui ont été décrits plus haut. Toutefois, comme on peut le voir sur la figure 4 les bobines 33a et 33b, associées aux épanouissements polaires 13a et 13b et montées respectivement sur les branches 26a et 26b, ne sont pas superposées aux bobines 33c et 33d, associées aux épanouissements polaires 15a et 15b et montées respectivement sur les branches 26c et 26d. Cette disposition décalée à l'avantage de permettre d'utiliser des bobines d'un plus grand diamètre sans augmenter la hauteur totale du moteur.

## Revendications

1. Moteur birotor multipolaire caractérisé en ce qu'il comprend:
- des premier (3) et deuxième (5) rotors multipolaires coaxiaux comportant chacun une pluralité de dipôles magnétiques (7) orientés sensiblement parallèlement à l'axe de rotation (9,11) des deux rotors et disposés selon un arrangement annulaire autour dudit axe, lesdits dipôles (7) étant en outre orientés alternativement dans un premier sens et dans le sens opposé;
- des première (13) et deuxième (15) parties statoriques;
- une partie statorique intermédiaire (17) disposée entre lesdites première et deuxième parties statoriques; chacune desdites parties statoriques (13,15,17) comprenant une ouverture statorique (19,20,21), lesdites ouvertures statoriques étant alignées selon un axe confondu avec ledit axe de rotation desdits rotors (3,5), lesdites première et deuxième parties statoriques (13,15) comprenant en outre chacune des premier et deuxième épanouissements polaires (13a,13b,15a,15b) situés de part et d'autre de ladite ouverture statorique respective (19,20), lesdits premiers (13a,15a) et deuxièmes (13b,15b) épanouissements polaires définissant respectivement des premières et deuxièmes (28a,28b) crénelures formées d'une succession régulière de dents (35) et d'embrasures (36) sur les bords desdites ouvertures statoriques respectives (19,20) , chacun desdits épanouissements polaires (13a,13b,15a,15b) étant relié à ladite partie statorique intermédiaire (17) par une branche de guidage du flux magnétique (26a,26b,26c,26d) sur laquelle est montée une bobine (33a,33b,33c,33d), lesdites bobines étant en outre reliées électriquement à des moyens prévus pour commander et alimenter ledit moteur birotor, ledit moteur birotor étant encore caractérisé en ce que ledit premier rotor (3) est monté à rotation entre ladite première partie statorique (13) et ladite partie statorique intermédiaire (17), lesdits dipôles (7) du premier rotor (3) se trouvant d'une part en regard desdites première et deuxième crénelures (28a,28b) de ladite première partie statorique (13) et d'autre part en regard d'un épanouissement de la partie statorique intermédiaire, et en ce que ledit deuxième rotor (5) est monté rotatif entre ladite deuxième partie statorique (15) et ladite partie statorique intermédiaire (17), lesdits dipôles (7) du deuxième rotor (5) se trouvant d'une part en regard desdites première et deuxième crénelures de ladite deuxième partie statorique (15) et d'autre part en regard dudit épanouissement de la partie statorique intermédiaire.

2. Moteur birotor selon la revendication 1, caractérisé en ce que les centres de deux embrasures successives d'une crénelure de la première partie statorique (13) sont séparés par une distance angulaire égale à celle qui séparent un desdits dipôles magnétiques (7) du prochain dipôle magnétique (7) orienté dans le même sens sur le premier rotor (3), et en ce que les centres de deux embrasures successives d'une crénelure de la deuxième partie statorique (15) sont séparés par une distance angulaire égale à celle qui séparent un desdits dipôles magnétiques (7) du prochain dipôle magnétique (7) orienté dans le même sens sur le deuxième rotor (5).

3. Moteur birotor selon la revendication 1, caractérisé en ce que le positionnement relatif desdites première (28a) et deuxième (28b) crénelures de chacune des première et deuxième parties statoriques (13,15) est tel que lorsqu'un desdits dipôles magnétiques (7) se trouve exactement en regard du centre d'une embrasure de ladite première crénelure (28a), les centres des embrasures de ladite deuxième crénelure (28b) se trouvent sensiblement entre deux dipôles (7) successifs.

4. Moteur birotor selon la revendication 1, caractérisé en ce qu'il comporte des moyens prévus pour déterminer un couple de positionnement pour chacun desdits rotors (3,5), lesdits moyens comportant au moins un évidement situé sur la périphérie de ladite ouverture statorique (21) de ladite partie statorique intermédiaire (17).

5. Moteur birotor selon la revendication 1, caractérisé en ce que le nombre de dipôles magnétiques (7) sur au moins l'un desdits rotors (3,5) est de trente.

6. Moteur birotor selon la revendication 1, caractérisé en ce que lesdites première (28a) et deuxième (28b) crénelures régulières de chacune des première et deuxième parties statoriques (13,15) sont jointes à leurs deux extrémités par des première et deuxième embrasures de liaison (38,39).

7. Moteur birotor selon la revendication 6, caractérisé en ce qu'un isthme de haute réluctance magnétique entre lesdits premier et deuxième épanouissements polaires (13a,13b,15a,15b) est prévu au niveau de chacune desdites première et deuxième embrasures de liaison (38,39).

8. Moteur birotor selon la revendication 1, caractérisé en ce que ladite partie statorique intermédiaire (17) est constituée d'un anneau (23) monté à l'extrémité d'un corps allongé (24) à l'autre extrémité duquel sont prévues deux oreilles de contact magnétique (31).

9. Moteur birotor selon la revendication 1, caractérisé en ce que lesdits premier et deuxième stators (3,5) sont identiques.

10. Moteur birotor selon la revendication 1, caractérisé en ce que lesdites branches de guidage (26c,26d) qui sont reliées à ladite deuxième partie statorique et lesdites branches (26a,26b) qui sont reliées à ladite première partie statorique sont agencées de manière que les bobines (33a, 33b) associées à la première partie statorique (13) ne soient pas superposées aux bobines (33c,33d) associées à la deuxième partie statorique (15) relativement à une projection dans un plan général du moteur.

## Patentansprüche

1. Mehrpoliger Birotor-Motor, dadurch gekennzeichnet, daß er umfaßt:
- erste (3) und zweite (5) mehrpolige, koaxiale Rotoren, welche jeweils eine Vielzahl magnetischer, im wesentlichen parallel zur Rotationsachse (9, 11) der beiden Rotoren ausgerichteter und in einer ringförmigen Anordnung um diese Achse angeordneter Dipole (7) umfassen, wobei die Dipole (7) zudem abwechselnd in einer ersten und in der entgegengesetzten Richtung ausgerichtet sind;
- erste (13) und zweite (15) Statorteile;
- ein zwischen den ersten und zweiten Statorteilen angeordnetes Statorzwischenteil (17); wobei jedes der Statorteile (13, 15, 17) eine Statoröffnung (19, 20, 21) aufweist, die Statoröffnungen bezüglich einer mit der Rotationsachse der Rotoren (3, 5) zusammenfallenden Achse ausgerichtet sind, jedes der ersten und zweiten Statorteile (13, 15) zudem auf beiden Seiten der jeweiligen Statoröffnungen (19, 20) angeordnete erste und zweite polare Fortsätze (13a, 13b, 15a, 15b) umfaßt, die ersten (13a, 15a) und zweiten (13b, 15b) polaren Fortsätze erste bzw. zweite, aus einer regelmäßigen Reihe von Zähnen (35) und Fugen (36) an den Rändern der entsprechenden Statoröffnungen (19, 20) gebildete Zahnreihen (28a, 28b) definieren, jeder der polaren Fortsätze (13a, 13b, 15a, 15b) mit dem Statorzwischenteil (17) durch einen Stab (26a, 26b, 26c, 26d) zur Führung des magnetischen Flusses, auf welchem eine Spule (33a, 33b, 33c, 33d) angebracht ist, verbunden ist, wobei die Spulen zudem elektrisch mit zur Steuerung und Speisung des Birotor-Motors vorgesehenen Mitteln verbunden sind, und der Birotor-Motor noch dadurch gekennzeichnet ist, daß der erste Rotor (3) zur Rotation zwischen dem ersten Statorteil (13) und dem Statorzwischenteil (17) angebracht ist, die Dipole (7) des ersten Rotors (3) sich einerseits gegenüber der ersten und zweiten Zahnreihe (28a, 28b) des ersten Statorteils (13) und andererseits gegenüber einem Fortsatz des Statorzwischenteils befinden, und dadurch, daß der zweite Rotor (5) rotierbar zwischen dem zweiten Statorteil (15) und dem Statorzwischenteil (17) angeordnet ist, wobei die Dipole (7) des zweiten Rotors (5) sich einerseits gegenüber der ersten und zweiten Zahnreihe des zweiten Statorteils (15) und andererseits gegenüber dem Fortsatz des Statorzwischenteils befinden.

2. Birotor-Motor nach Anspruch 1, dadurch gekennzeichnet, daß die Mittelpunkte zweier aufeinanderfolgender Fugen einer Zahnreihe des ersten Statorteils (13) durch einen Winkelabstand getrennt sind, welcher gleich dem ist, der einen der magnetischen Dipole (7) vom nächsten, in gleicher Richtung auf dem ersten Rotor (3) ausgerichteten magnetischen Dipol (7) trennt, und dadurch, daß die Mittelpunkte zweier aufeinanderfolgender Fugen einer Zahnreihe des zweiten Statorteils (15) durch einen Winkelabstand getrennt sind, welcher gleich dem ist, der einen der magnetischen Dipole (7) vom nächsten, in gleicher Richtung auf dem zweiten Rotor (5) ausgerichteten magnetischen Dipol (7) trennt.

3. Birotor-Motor nach Anspruch 1, dadurch gekennzeichnet, daß die relative Anordnung der ersten (28a) und der zweiten (28b) Zahnreihe jedes des ersten und des zweiten Statorteils (13, 15) so gestaltet ist, daß, wenn die magnetischen Dipole (7) sich genau gegenüber dem Mittelpunkt einer Fuge der ersten Zahnreihe (28a) befinden, sich die Mittelpunkte der Fugen der zweiten Zahnreihe (28b) im wesentlichen zwischen zwei aufeinanderfolgenden Dipolen (7) befinden.

4. Birotor-Motor nach Anspruch 1, dadurch gekennzeichnet, daß er zur Bestimmung eines Positionspaars für jeden der Rotoren (3, 5) vorgesehene Mittel umfaßt, wobei die Mittel mindestens eine Vertiefung am Rand der Statoröffnung (21) des Statorzwischenteils (17) umfassen.

5. Birotor-Motor nach Anspruch 1, dadurch gekennzeichnet, daß die Anzahl der magnetischen Dipole (7) auf mindestens einem der Rotoren (3, 5) dreißig beträgt.

6. Birotor-Motor nach Anspruch 1, dadurch gekennzeichnet, daß die erste (28a) und zweite (28b) regelmäßige Zahnreihe jedes des ersten und zweiten Statorteils (13, 15) an ihren beiden Enden durch erste und zweite Verbindungsfugen (38, 39) verbunden sind.

7. Birotor-Motor nach Anspruch 6, dadurch gekennzeichnet, daß eine Verengung hohen magnetischen Widerstands zwischen den ersten und zweiten polaren Fortsätzen (13a, 13b, 15a, 15b) auf Höhe jeder der ersten und zweiten Verbindungsfugen (38, 39) vorgesehen ist.

8. Birotor-Motor nach Anspruch 1, dadurch gekennzeichnet, daß das Statorzwischenteil (17) aus einem Ring (23) besteht, welcher an dem Ende eines Körpers (24), der zum anderen Ende, an welchem zwei magnetische Kontaktösen (31) vorgesehen sind, verlängert ist, angebracht ist.

9. Birotor-Motor nach Anspruch 1, dadurch gekennzeichnet, daß der erste und zweite Stator (3, 5) identisch sind.

10. Birotor-Motor nach Anspruch 1, dadurch gekennzeichnet, daß die Führungsstäbe (26c, 26d), welche mit dem zweiten Statorteil verbunden sind, und die Stäbe (26a, 26b), welche mit dem ersten Statorteil verbunden sind, so angeordnet sind, daß die mit dem ersten Statorteil (13) verbundenen Spulen (33a, 33b) entsprechend einer Projektion auf eine allgemeine Ebene des Motors nicht die mit dem zweiten Statorteil (15) verbundenen Spulen (33c, 33d) überdecken.

## Claims

1. Multipolar motor with two rotors, characterized in that it comprises :
- first (3) and second (5) multipolar coaxial rotors each comprising a plurality of magnetic dipoles (7) which are oriented substantially parallel to the axis of rotation (9, 11) of the two rotors and which are arranged in a ring around said axis, said dipoles (7) being also oriented alternatively in a first direction and in the opposite direction;
- first (13) and second (15) stator parts;
- an intermediate stator part (17) arranged between said first and second stator parts;
each of said stator parts (13, 15, 17) comprising a stator opening (19, 20, 21), said stator openings being aligned along an identical axis to said rotation axis of said rotors (3, 5), said first and second stator parts (13, 15) each further comprising first and second polar expansions (13a, 13b, 15a, 15b) situated on either side of said respective stator opening (19, 20), said first (13a, 15a) and second (13b, 15b) polar expansions defining respectively first and second serrations (28a, 28b) formed of a regular succession of teeth (35) and slots (36) on the edges of said respective stator openings (19, 20), each of said polar expansions (13a, 13b, 15a, 15b) being connected to said intermediate stator part (17) by a magnetic flux guiding leg (26a, 26b, 26c, 26d) on which a winding (33a, 33b, 33c, 33d) is mounted, said windings being also electrically connected to means provided for controlling and energizing said motor with two rotors, said motor with two rotors being further characterized in that said first rotor (3) is rotatably mounted between said first stator part (13) and said intermediate stator part (17), said dipoles (7) of said first rotor (3) being situated, on the one hand, facing said first and second serrations (28a, 28b) of said first stator part (13) and, on the other hand, facing a polar expansion of the intermediate stator part, and in that said second rotor (5) is rotatably mounted between said second stator part (15) and said intermediate stator part (17), said dipoles (7) of the second rotor (5) being situated, on the one hand, facing said first and second serrations of said second stator part (15) and, on the other hand, facing said intermediate stator part polar expansion.

2. Motor with two rotors according to claim 1, characterized in that the centres of two successive slots of a serration of the first stator part (13) are separated by an angular distance equal to that which separates one of said magnetic dipoles (7) from the following magnetic dipole (7) oriented in the same direction on the first rotor (3), and in that the centres of two successive slots of a serration of the second stator part (15) are separated by an angular distance equal to that which separates one of said magnetic dipoles (7) from the following magnetic dipole (7) oriented in the same direction on the second rotor (5).

3. Motor with two rotors according to claim 1, characterized in that the relative positioning of said first (28a) and second (28b) serrations of each of the first and second stator parts (13, 15) is such that when one of said magnetic dipoles (7) is situated exactly facing the centre of a slot of said first serration (28a), the centres of the slots of said second serration (28b) are situated substantially between two successive dipoles (7).

4. Motor with two rotors according to claim 1, characterized in that it comprises means provided for determining a positioning torque for each of said rotors (3, 5), said means comprising at least one recess situated at the periphery of said stator opening (21) of said intermediate stator part (17).

5. Motor with two rotors according to claim 1, characterized in that the number of magnetic dipoles (7) on at least one of said rotors (3, 5) is thirty.

6. Motor with two rotors according to claim 1, characterized in that said first (28a) and second (28b) regular serrations of each of the first and second stator parts (13, 15) are joined at both their ends by first and second connecting slots (38, 39).

7. Motor with two rotors according to claim 6, characterized in that a highly reluctant isthmus is provided between said first and second polar expansions (13a, 13b, 15a, 15b) on a level with each of said first and second connecting slots (38, 39).

8. Motor with two rotors according to claim 1, characterized in that said intermediate stator part (17) consists of a ring (23) mounted at the end of an elongated body (24) at the other end of which two magnetic contact lugs (31) are provided.

9. Motor with two rotors according to claim 1, characterized in that said first and second stators (3, 5) are identical.

10. Motor with two rotors according to claim 1, characterized in that said legs (26c, 26d) which are connected to said second stator part and said legs (26a, 26b) which are connected to said first stator part are arranged so that the windings (33a, 33b) associated with the first stator part (13) are not superposed on the windings (33c, 33d) associated with the second stator part (15) in relation to a projection in a general plane of the motor.
